# EUROPÄISCHE PATENTSCHRIFT

(11) **EP 4 397 007 B1**
(45) Veröffentlichungstag und Bekanntmachung des Hinweises auf die Patenterteilung: **30.09.2026**
(21) Anmeldenummer: 22765842.4
(22) Anmeldetag: 17.08.2022
(51) Int. Cl.: H04L 12/40, H04L 49/351, H04L 12/66

(54) **NETZWERK-KOPPLUNGSEINRICHTUNG FÜR EIN NETZWERK UND NETZWERK MIT EINER NETZWERK-KOPPLUNGSEINRICHTUNG**
NETWORK COUPLING APPARATUS FOR A NETWORK AND NETWORK HAVING A NETWORK COUPLING APPARATUS
APPAREIL DE COUPLAGE DE RÉSEAU POUR UN RÉSEAU ET RÉSEAU AYANT UN APPAREIL DE COUPLAGE DE RÉSEAU

(30) Priorität: 30.08.2021 LU 500592
(43) Veröffentlichungstag der Anmeldung: 10.07.2024
(73) Patentinhaber: PHOENIX CONTACT GmbH & Co. KG, 32825 Blomberg (DE)
(72) Erfinder: SCHLABECK, Tarek, 32278 Kirchlengern (DE)
(74) Vertreter: LifeTech IP Spies & Behrndt Patentanwälte PartG mbB
(86) Internationale Anmeldenummer: PCT/EP2022/072985
(87) Internationale Veröffentlichungsnummer: WO 2023/030892

(56) Entgegenhaltungen:
- US-A1- 2005 122 689
- US-A1- 2020 252 159
- UNKNOWN: "MAX24287 1Gbps Parallel-to-Serial MII Converter General Description", 30 April 2019 (2019-04-30), pages 1 - 72, XP055914377, Retrieved from the Internet <URL:https://ww1.microchip.com/downloads/en/DeviceDoc/MAX24287-data-sheet-2019-04.pdf> [retrieved on 20220421]

## Beschreibung

Die vorliegende Erfindung betrifft eine Netzwerk-Kopplungseinrichtung zur Anbindung von Endgeräten an ein Netzwerk, vorzugsweise an ein Ethernet-Netzwerk.

Das so genannte Industrielle Internet der Dinge ("Industrial Internet of Things/IIoT") stellt beispielsweise im Bereich des Industrial Ethernet in der Fertigungs- und Prozessindustrie besondere Anforderungen an die Netzwerktechnik zur Prozessautomation. Einerseits sollen zukünftig viele Netzwerkteilnehmer, das heißt Endgeräte und diese möglichst einfach an das Netzwerk anschließbar sein, was zu einer Miniaturisierung der Netzwerktechnik führt. Andererseits steigt allerdings auch der Bedarf zur Übertragung großer Datenmengen und somit an hohen Datenübertragungsraten, insbesondere beispielsweise auch durch den Einsatz von Künstliche-Intelligenz-(KI)-Technologien.

Vor dem Hintergrund der besonderen Anforderungen der Fertigungs- und Prozessindustrie, wurde der so genannte Ethernet Advanced Physical Layer (Ethernet APL) Standard entwickelt, welcher nach dem ISO/OSI-7-Schichtenmodell eine zusätzliche physikalische Schicht der Ethernet-Kommunikationstechnologie darstellt und somit die Kodierung von Bits in elektrische Signale und die Übertragung der elektrischen Signale (Impulse) regelt. Anstelle von 8-adrigen Leitungen mit vier Adernpaaren kommen hierbei Zweidrahtleitungen zum Einsatz. Dadurch können beispielsweise viele kleine Endgeräte, wie beispielsweise Sensoren, Schalter, Bedienelemente, über einen Ethernet-Switch als Kopplungseinrichtung relativ einfach an ein Steuerungsnetzwerk angebunden werden. Die Datenübertragungsrate von 10 Mbit/s ist für derartige Endgeräte ausreichend.

Ferner wird mit dem Begriff "IEEE Std 802.3cg^{™}-2019" im Bereich der lokalen Netzwerke (LAN) der weiterentwickelte Ethernet-Datenübertragungsstandard zur drahtgebundenen Kommunikation definiert oder spezifiziert, welcher Datenübertragungsraten mit 10 Mbit/s ermöglicht. Die Übertragung von Daten, das heißt Ethernet-Signalen erfolgt über eine Leitung, die, wie oben bereits beschrieben, aus zwei Einzeladern, das heißt aus zwei isolierten elektrischen Drähten auf Kupferbasis besteht. Die Stammleitung ("Trunk") eines derartigen Netzwerks kann maximal 1000 m lang sein und Stichleitungen ("Spurs") maximal 200 m. Die zwei Einzeladern des einzigen Adernpaars sind hierbei vorzugsweise miteinander verdrillt. Derartige Leitungen werden auch als "Twisted-Pair-Kabel" bezeichnet. Das Übertragungsprotokoll dieses Netzwerkstandards, welcher auch als "Single-Pair-Ethernet" bezeichnet wird, ist echtzeitfähig und ermöglicht einfache und robuste Verkabelungen.

Zur Bereitstellung der oben beschriebenen Datenübertragungstechnologie mittels elektrischer Signale sind aus dem Stand der Technik halbleiterbasierte Einkanal-Sende-Empfangs-Einheiten ("Physical-Layer-(PHY) -Transceiver"), das heißt Einkanal-Ethernet-Transceiver bekannt, welche/r mit der IEEE 802.3cg^{™} 10Base-T1L-Spezifikation konform sind und mit einer einzigen angeschlossenen Twisted-Pair-Zweidrahtleitung Ethernet-Signale mit einer Datenübertragungsrate von 10 Mbit/s übertragen können. Es handelt sich hierbei beispielsweise um die Single-Pair-Ethernet-PHY-Bausteine "DP83TD510E" der Firma Texas Instruments Incorporated sowie "ADIN1100" der Firma Analog Devices, Inc.

Das Dokument US 2020/252159 A1 offenbart ein Ethernet-Kommunikationsgerät und ein Fehlerbehebungsverfahren dafür, das eine Fehlerbehandlung und -behebung je nach Art und Schwere eines physischen und/oder logischen Fehlers durchführen kann, der während der Ethernet-Kommunikation auftritt.

Das Dokument US 2005/122689 A1 betrifft einen Ethernet-Switch zur Verwendung in einem Umspannwerk eines Elektrizitätsversorgungsunternehmens, eine Vorrichtung zum Kühlen des Switches, die Folgendes umfasst: ein thermoelektrisches Kühlelement mit einer ersten Oberfläche für den thermischen Kontakt mit einer Komponente im Ethernet-Switch und einer zweiten Oberfläche für den thermischen Kontakt mit einem Kühlkörper, wobei das thermoelektrische Kühlelement als Reaktion auf einen an das thermoelektrische Kühlelement angelegten Strom Wärme von der ersten Oberfläche an die zweite Oberfläche überträgt; einen Steuerblock zum Anlegen des Stroms an das thermoelektrische Kühlelement, wenn die Temperatur des Ethernet-Switches einen vorgegebenen Bereich überschreitet.

Das als Datenblatt angeblich am 30. April 2029 veröffentlichte Dokument "MAX24287 1 Gbps Parallel-to-Serial MII Converter" beschreibt einen flexiblen, kostengünstigen Ethernet-Schnittstellenkonvertierungs-IC.

Allerdings sind diese Sende-Empfangs-Einheiten der physikalischen Schicht nach dem ISO/OSI-7-Schichtenmodell als Einkanal-Sende-Empfangs-Einheiten ("Einzelport-Transceiver") für Endgeräte mit einem einzigen Kanal und somit mit einer externen Schnittstelle konzipiert und nicht für Ethernet-Switche, das heißt Kopplungseinrichtungen mit mehrkanaligen Sende-Empfangs-Einheiten für hohe Datenübertragungsraten von beispielsweise 1 GBit/s und allerdings kleineren maximalen Längen der Leitungen von beispielsweise 100 m. Ein Kanal der Sende-Empfangs-Einheit stellt dabei einen Port, das heißt ein externes Interface zur Verfügung.

Um die Funktionalität derartiger, das heißt oben beschriebener Einkanal-Sende-Empfangs-Einheiten im Rahmen eines Ethernet-Switches bereitzustellen, sind zusätzliche Maßnahmen erforderlich. Beispielsweise kommt hierbei ein Schnittstellenwandler in Form einer programmierbaren logischen Schaltung eines integrierten Schaltkreises ("Field Programmable Gate Array (FPGA)") zum Einsatz, um eine Anpassung an den Übertragungsstandard zu erreichen. Die Verwendung einer programmierbaren logischen Schaltung, das heißt eines FPGA-Bausteins resultiert allerdings in einem hohen Entwicklungsaufwand und verursacht zudem hohe Herstell- und Produktkosten.

Ferner sind halbleiterbasierte Steuermodule für Ethernet-Switches bekannt, welche eine direkte Anbindung an entsprechende Einkanal-Sende-Empfangs-Einheiten ermöglichen, jedoch eine sehr geringe Anzahl an Kanälen, das heißt Ports und somit externen Schnittstellen bieten. Üblich sind hier 5 Kanäle/Ports.

Um die Anzahl an Kanälen und somit zur Verfügung stehenden Ports zu erhöhen, können mehrere Steuermodule entsprechend kaskadiert werden. Jedoch findet die Kaskadierung, das heißt die Kaskadiertiefe ihre Grenzen in zunehmenden Latenzzeiten bei der Übertragung von Daten, das heißt von Ethernet-Signalen, was sich wiederum nachteilig auf die Zuverlässigkeit der Übertragung der Daten auswirkt.

Es ist daher eine Aufgabe der vorliegenden Erfindung, eine Netzwerk-Kopplungseinrichtung, vorzugsweise einen Fast-Ethernet-Switch oder einen Gigabit-Ethernet-Switch, bereitzustellen oder weiterzubilden, welche/r konfiguriert ist, zumindest die Funktionalität zumindest einer Einkanal-Sende-Empfangseinheit nach dem IEEE Std 802.3cg^{™}-2019-Datenübertragungsstandard, auf einfache Weise darzustellen.

Die Aufgabe wird durch die Merkmale des unabhängigen Anspruchs 1 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die Erfindung betrifft nach einem ersten allgemeinen Gesichtspunkt eine Netzwerk-Kopplungseinrichtung gemäß Anspruch 1, vorzugsweise Ethernet-Switch, zur Anbindung zumindest eines Geräts, vorzugsweise Endgeräts, an ein Netzwerk, vorzugsweise Ethernet-Netzwerk, über eine elektrische Leitung, mit zumindest einer Anschluss-Einheit zur Verbindung des zumindest einen Geräts mit der Netzwerk-Kopplungseinrichtung über die elektrische Leitung, und zumindest einer Sende-Empfangs-Einheit, wobei die zumindest eine Sende-Empfangs-Einheit der zumindest einen Anschluss-Einheit zugeordnet ist und zum Ein- und/oder Auskoppeln zumindest eines Signals in die Leitung und/oder aus der Leitung konfiguriert ist, und mit einer Steuereinheit, wobei die Steuereinheit konfiguriert ist, das zumindest eine Signal über die zumindest eine Sende-Empfangs-Einheit und die zumindest eine Anschluss-Einheit an das Gerät zu leiten und/oder von dem Gerät zu empfangen, wobei die Netzwerk-Kopplungseinrichtung zumindest ein Wandlungsmodul umfasst, wobei das zumindest eine Wandlungsmodul zwischen der zumindest einen Sende-Empfangs-Einheit und der Steuereinheit angeordnet ist und konfiguriert ist, das zumindest eine Signal zur Übertragung zwischen der Steuereinheit und der zumindest einen Sende-Empfangs-Einheit zu wandeln.

Dadurch kann beispielsweis eine Netzwerk-Kopplungseinrichtung bereitgestellt werden, die als Ethernet-Gigabit Switch ausgebildet ist und über zumindest einen Einkanaligen-Transceiver verfügt, welcher zur Anbindung von Endgeräten, welche vergleichsweise geringe Datenübertragungsraten erfordern, über eine Zweidrahtleitung ausgebildet ist.

Gemäß einem weiteren Aspekt der Erfindung kann vorgesehen sein, dass die Steuereinheit ein Steuereinheit-Schnittstellenelement und die zumindest eine Sende-Empfangs-Einheit ein Sende-Empfangs-Einheit-Schnittstellenelement aufweist, und die Steuereinheit mit dem zumindest einen Wandlungsmodul über das Steuereinheit-Schnittstellenelement und die zumindest eine Sende-Empfangs-Einheit mit dem zumindest einen Wandlungsmodul über das Sende-Empfangs-Einheit-Schnittstellenelement gekoppelt ist.

Durch das zumindest eine Wandlungsmodul ist es möglich, moderne Netzwerk-Kopplungseinrichtungen, das heißt Switches mit Gigabit-Ethernet-fähigen Schnittstellen zusammen mit verfügbaren T1L-Sende-Empfangseinheiten, das heißt T1L-(PHY)-Transceivern zusammen zu betreiben.

Es ist möglich, dass das Steuereinheit-Schnittstellenelement als SGMII-Schnittstelle (Serial Gigabit Media-Independent Interface-(SGMII)-Schnittstelle) oder als QSGMII-Schnittstelle (Quad Serial Gigabit Media-Independent Interface-(QSGMII)-Schnittstelle) ausgebildet ist, oder eine SGMII-Schnittstellenfunktionalität und/oder eine QSGMII-Schnittstellenfunktionalität umfasst.

Gemäß einem weiteren Gesichtspunkt der Erfindung kann vorgesehen sein, dass das Sende-Empfangs-Einheit-Schnittstellenelement als RMII-Schnittstelle (Reduced Media-Independent Interface-(RMII)-Schnittstelle) ausgebildet ist und/oder eine RMII-Schnittstellenfunktionalität umfasst.

Es ist alternativ möglich, dass das zumindest eine Wandlungsmodul ein erstes Schnittstellenelement zur Koppelung mit der Steuereinheit und ein zweites Schnittstellenelement zur Koppelung mit der zumindest einen Sende-Empfangs-Einheit aufweist, wobei das erste Schnittstellenelement als SGMII-Schnittstelle oder als QSGMII-Schnittstelle ausgebildet ist, oder eine SGMII-Schnittstellenfunktionalität oder eine QSGMII-Schnittstellenfunktionalität umfasst; und/oder wobei das zweite Schnittstellenelement als RMII-Schnittstelle ausgebildet ist oder eine RMII-Schnittstellenfunktionalität umfasst.

Gemäß einem weiteren Aspekt der Erfindung kann vorgesehen sein, dass die Steuereinheit nach dem Fast-Ethernet-Datenübertragungsstandard oder vorzugsweise nach dem Gigabit-Ethernet-Datenübertragungsstandard konfiguriert und/oder ausgebildet ist.

Es ist möglich, dass die zumindest eine Sende-Empfangs-Einheit als Ethernet-Physical-Layer-(PHY)-Transceiver ausgebildet und/oder konfiguriert ist; und/oder nach dem Ethernet-Datenübertragungsstandard IEEE Std 802.3cg^{™}-2019 (10BASE T1L) konfiguriert und/oder spezifiziert ist und für das Ein- und/oder Auskoppeln des zumindest einen Signals vorzugsweise eine Datenübertragungsrate zumindest bis 10Mbits/s bereitstellt.

Es ist möglich, dass die zumindest eine Anschluss-Einheit als Port, vorzugsweise als RJ-45-Anschlussbuchse, ausgebildet ist. Alternativ ist es auch möglich, dass die zumindest eine Anschluss-Einheit als Anschlussbuchse nach einer anderen Spezifikation und/oder Norm ausgebildet ist.

Es ist möglich, dass die Netzwerk-Kopplungseinrichtung zusätzlich zumindest eine Anschluss-Einheit umfasst, welche als Small Form-factor Pluggable-(SFP)-Port ausgebildet ist.

Nach einem weiteren Gesichtspunkt der vorliegenden Erfindung kann vorgesehen sein, dass das zumindest eine Wandlungsmodul ausgebildet und/oder konfiguriert ist, die zumindest eine Sende-Empfangs-Einheit mit einem Takt von im Wesentlichen 50 MHz und/oder mit zumindest 50 MHz zu versorgen und/oder zu betreiben, vorzugsweise wenn das Sende-Empfangs-Einheit-Schnittstellenelement als RMII-Schnittstelle (Reduced Media-Independent Interface-(RMII)-Schnittstelle) ausgebildet ist und/oder eine RMII-Schnittstellenfunktionalität umfasst.

Eine externe Taktversorgung über einen Quarz wird somit beispielsweise entbehrlich. Dadurch können zusätzliche Komponenten oder Elemente der Netzwerk-Kopplungseinrichtung eingespart werden.

Die Erfindung betrifft nach einem zweiten allgemeinen Gesichtspunkt ein Netzwerk mit zumindest einer Netzwerk-Kopplungseinrichtung wie hierin offenbart.

Die zuvor beschriebenen Ausführungsbeispiele und Merkmale der vorliegenden Erfindung sind beliebig miteinander kombinierbar. Weitere oder andere Einzelheiten und vorteilhafte Wirkungen der Erfindung werden im Folgenden unter Bezugnahme auf die beigefügten Figuren näher erläutert.

Es zeigen:
- Fig. 1: einen schematischen Aufbau eines ersten Beispiels einer Netzwerk-Kopplungseinrichtung gemäß dem Stand der Technik;
- Fig. 2: einen schematischen Aufbau eines zweiten Beispiels einer Netzwerk-Kopplungseinrichtung gemäß dem Stand der Technik;
- Fig. 3: einen schematischen Aufbau eines dritten Beispiels einer Netzwerk-Kopplungseinrichtung gemäß dem Stand der Technik;
- Fig. 4: einen schematischen Aufbau eines Beispiels einer Netzwerk-Kopplungseinrichtung gemäß der vorliegenden Erfindung.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

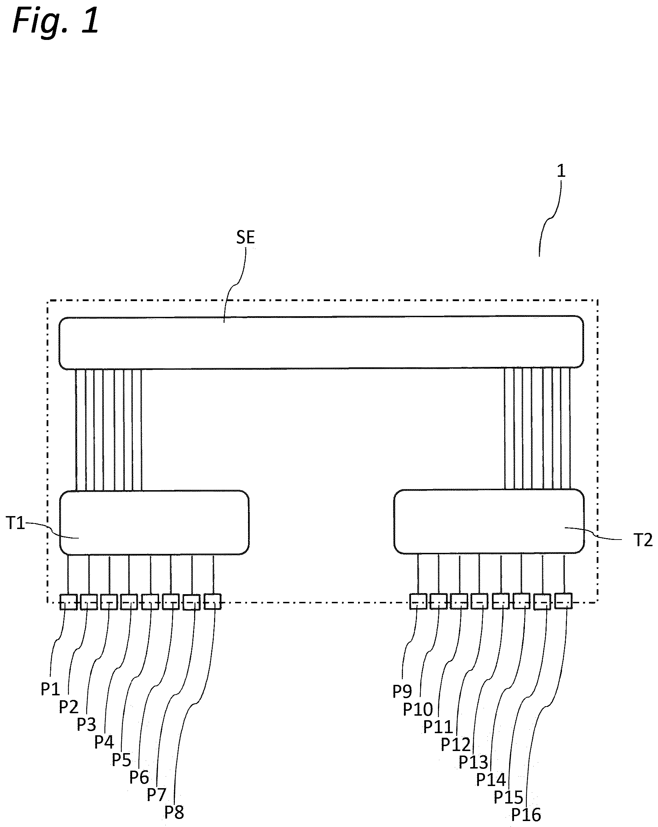

Die Figuren 1 bis 3 zeigen jeweils einen schematischen Aufbau von Beispielen einer Netzwerk-Kopplungseinrichtung 1, welche aus dem Stand der Technik bekannt sind. Die Beschreibung der schematisch dargestellten, bekannten Netzwerk-Kopplungseinrichtungen 1 beschränkt sich auf wesentliche Komponenten und Elemente in Zusammenhang mit der physikalischen Schicht nach dem ISO/OSI-7-Schichtenmodell.

Figur 1 zeigt einen schematischen Aufbau eines ersten Beispiels einer Netzwerk-Kopplungseinrichtung 1, welche aus dem Stand der Technik bekannt ist und zur Anbindung von Netzwerkteilnehmern an ein Netzwerk dient.

Die Netzwerk-Kopplungseinrichtung 1 ist als Ethernet-Switch ausgebildet und beispielsweise nach dem Datenübertragungsstandard IEEE 802.3ab^{™} (1000BASE-T) als Gigabit-Ethernet-Switch spezifiziert, bei welchem für die Übertragung von Daten vier Adernpaare und somit 8 Adern der Twisted-Pair-Kupferkabel verwendet werden. Die Netzwerk-Kopplungseinrichtung 1 teilt bei Anbindung an ein Ethernet-Netzwerk das Ethernet-Netzwerk in zwei Segmente auf.

Die Netzwerk-Kopplungseinrichtung 1 in Figur 1 umfasst eine Steuereinheit SE als Ethernet-Switch-Controller. Ferner umfasst die Netzwerk-Kopplungseinrichtung 1 eine erste Sende-Empfangs-Einheit T1 und an eine zweite Sende-Empfangs-Einheit T2. Sowohl die erste Sende-Empfangs-Einheit T1 als auch die zweite Sende-Empfangs-Einheit T2 ist zur Umwandlung von Bits in elektrische Signale, das heißt elektrische Impulse vorgesehen und dient daher zum Senden und Empfangen von Signalen über das Übertragungsmedium, was im vorliegenden Fall der Netzwerk-Kopplungseinrichtung 1 als Ethernet-Switch ein Kupferkabel in Form eines Twisted-Pair-Kabels ist. Mit anderen Worten sind die Sende-Empfangs-Einheiten T1 und T2 physikalische Zusatzchips und werden auch als "Gigabit-Physical-Layer-(PHY)-Transceiver" bezeichnet.

Jede der Sende-Empfangs-Einheiten T1 und T2 weist jeweils 8 Kanäle auf, sodass die Netzwerk-Kopplungseinrichtung 1 über insgesamt 16 Anschluss-Einheiten, das heißt (Gigabit-) Ports P1 bis P16 in Form von RJ45-Anschlussbuchsen verfügt.

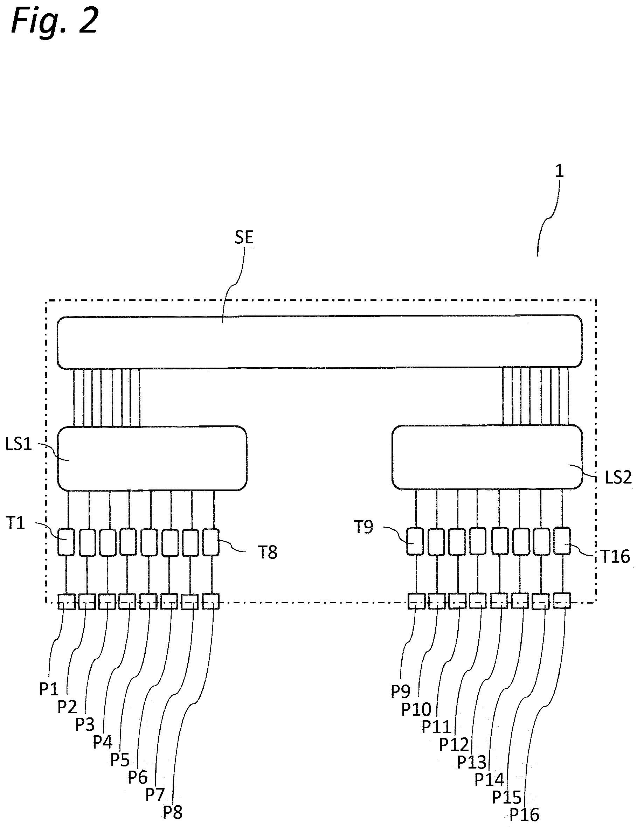

Figur 2 zeigt einen schematischen Aufbau eines zweiten Beispiels einer programmierbaren Netzwerk-Kopplungseinrichtung 1 gemäß dem Stand der Technik. Die Netzwerk-Kopplungseinrichtung 1 ist auch hier als Ethernet-Switch ausgebildet. Hinsichtlich Datenübertragung ist die Netzwerk-Kopplungseinrichtung 1 nach dem Standard IEEE 802.3cg^{™}-2019 (10BASE-T1L) spezifiziert oder mit diesem konform, wobei hableiterbasierte, programmierbare logische Schaltungen LS1 und LS2 zum Einsatz kommen. Mit anderen Worten weist die Netzwerk-Kopplungseinrichtung 1 in Figur 2 zwei so genannte "Field Programmable Gate Arrays" (FPGA) LS1 und LS2 auf, welche jeweils einen programmierbaren digitalen Baustein darstellen, welcher einerseits direkt an die Steuereinheit SE der Netzwerk-Kopplungseinrichtung 1 angebunden ist und andererseits über jeweils 8 Kanäle zur Anbindung von jeweils 8 Einkanal-Sende-Empfangs-Einheiten T1, ..., T16 verfügt. Die Einkanal-Sende-Empfangs-Einheiten T1 bis T16 sind somit jeweils als Single-Pair-Ethernet-PHY-Transceiver ausgebildet und ermöglichen jeweils eine Datenübertragungsrate von 10Mbit/s über jeweils eine Twisted-Pair-Zweidrahtleitung (in Figur 2 nicht dargestellt). Zum Anschluss der Twisted-Pair Leitungen dienen wiederum Anschluss-Einheiten P1 bis P16, welche beispielsweise als RJ45-Anschlussbuchsen ausgebildet sind. Alternativ können auch Anschlussbuchsen nach anderen Spezifikationen zum Einsatz kommen. Wie bereits oben beschrieben, bedingt die Verwendung von programmierbaren logischen Schaltungen LS1, LS2, das heißt FPGA-Bausteinen einen hohen Entwicklungsaufwand und sowie hohe Herstell- und Produktkosten.

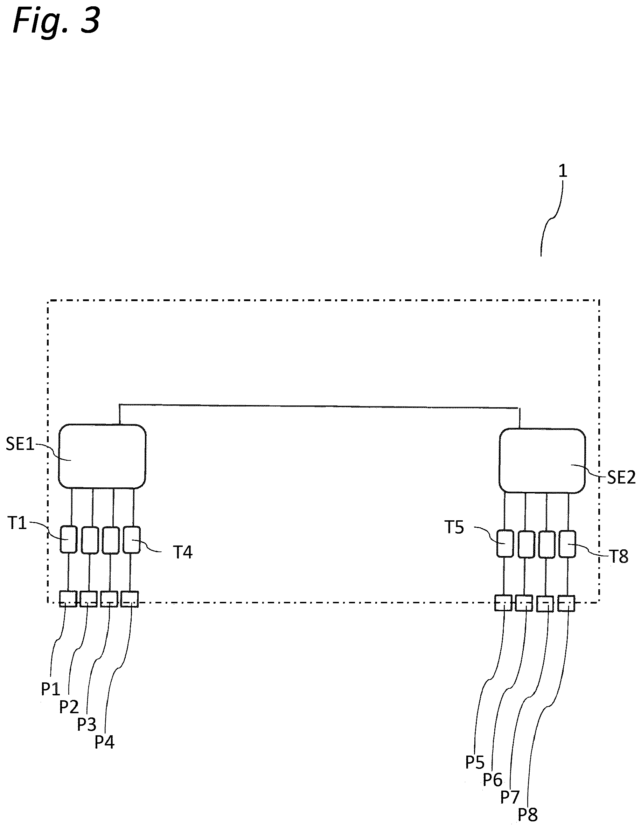

Figur 3 zeigt einen schematischen Aufbau eines dritten Beispiels einer Netzwerk-Kopplungseinrichtung 1 gemäß dem Stand der Technik.

Die Netzwerk-Kopplungseinrichtung 1 ist auch hier als Ethernet-Switch ausgebildet und gemäß dem Datenübertragungsstandard IEEE 802.3cg^{™}-2019 (10BASE-T1L) spezifiziert oder mit diesem konform.

Die Netzwerk-Kopplungseinrichtung 1 ist durch eine Kaskadierung gekennzeichnet, wonach eine erste Steuereinheit SE1 und eine zweite Steuereinheit SE2 über eine Anschluss-Einheit (Uplink-Port) miteinander verbunden sind (in Figur 3 nicht näher gekennzeichnet).

Jede der Steuereinheiten SE1 und SE2 verfügt über jeweils 4 Kanäle zur Anbindung von jeweils 4 Einkanal-Sende-Empfangs-Einheiten T1 bis T4 und T5 bis T8. Die Einkanal-Sende-Empfangs-Einheiten T1 bis T4 und T5 bis T8 sind wiederum mit entsprechenden Anschluss-Einheiten (beispielsweise Ports/RJ45-Anschlussbuchsen) P1 bis P4 und P5 bis P8 verbunden.

Das in Figur 3 schematisch dargestellte Beispiel der Netzwerk-Kopplungseinrichtung 1 ermöglicht zwar eine Datenübertragungsrate von 10Mbit/s, jedoch bedingt die Verwendung zweier oder allgemein gesehen mehrerer Steuereinheiten SE1, SE2 wiederum eine gewisse Verzögerung bei der Übertragung von Daten, was die Latenz der Netzwerk-Kopplungsrichtung 1 und insgesamt des Netzwerks erhöht.

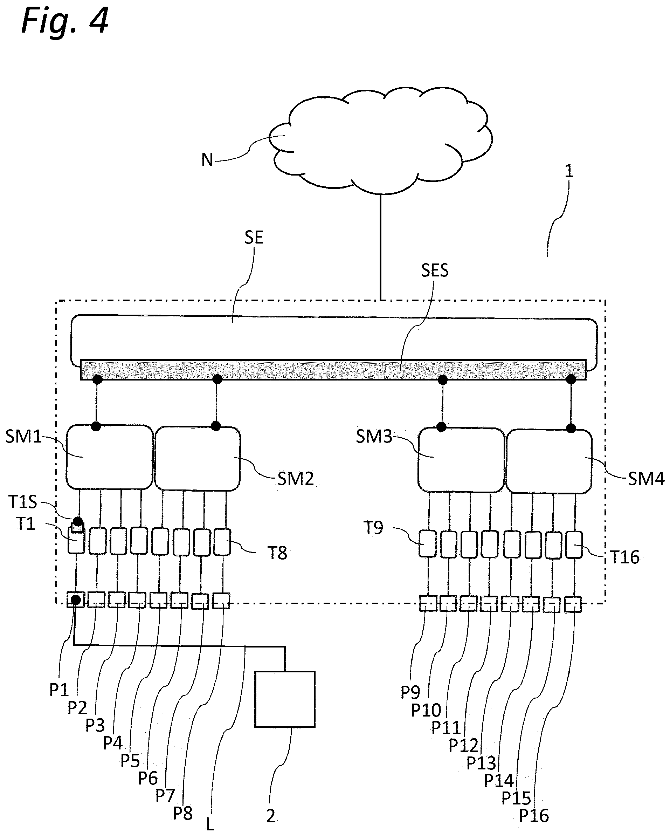

Figur 4 zeigt nun einen schematischen Aufbau eines Beispiels einer Netzwerk-Kopplungseinrichtung 1 gemäß der vorliegenden Erfindung.

Die Netzwerk-Kopplungseinrichtung 1 gemäß der vorliegenden Erfindung ist vorzugsweise nach dem Ethernet-Standard für drahtgebundene Netzwerke N zur Übertragung von Daten in Form von elektrischen Signalen, das heißt elektrischen Impulsen konfiguriert. Die Netzwerk-Kopplungseinrichtung 1 stellt einen Ethernet-Switch dar, welcher an industrielle Umgebungsbedingungen der Fertigungs- und Prozessindustrie angepasst ist und die Möglichkeit bietet, eine Vielzahl von Endgeräten 2 mit geringeren Anforderungen hinsichtlich Datenmenge und/oder Datenübertragungsrate an das Netzwerk N anzubinden, was nachfolgend noch näher beschrieben wird.

In Figur 4 ist ein an das Netzwerk N anzubindendes Gerät, das heißt Endgerät 2 schematisch dargestellt. Das Endgerät 2 kann als Feldgerät in der Feldebene beispielsweise ein Sensor oder ein Aktor (Schalter, Bedienelement, etc.) ein, um entsprechende Prozesse zu steuern. Das Netzwerk N kann vorzugsweise ein echtzeitfähiges Steuerungsnetzwerk sein.

Das Endgerät 2 ist über eine Leitung L mit der Netzwerk-Kopplungseinrichtung 1 verbunden. Die Leitung L ist eine drahtgebundene elektrische Leitung L und vorzugsweise als einpaariges, das heißt ein Adernpaar aufweisendes Kabel auf Kupferbasis (Zweidrahtleitung) ausgebildet. Die Verbindung, das heißt eine Signalkommunikationsverbindung des Endgeräts 2 mit der Netzwerk-Kopplungseinrichtung 1 erfolgt an der Netzwerk-Kopplungseinrichtung 1 über die Anschluss-Einheit P1 der Netzwerk-Kopplungseinrichtung 1. In Figur 4 sind insgesamt 16 Anschluss-Einheiten P1 bis P16 dargestellt. Die Netzwerk-Kopplungseinrichtung 1 weist demnach 16 Ports P1 bis P16 auf. Die Ports P1 bis P16 können vorzugsweise als RJ45-Anschlussbuchsen zum mechanischen Anschluss der Leitung/en L über jeweils eine Steckverbindung ausgebildet sein. Es ist möglich, dass die Ports P1 bis P16 auch nach einer anderen Spezifikation und/oder nach einem anderen Standard ausgebildet sind.

Ferner umfasst die Netzwerk-Kopplungseinrichtung die Sende-Empfangs-Einheiten T1 bis T8 sowie T9 bis T16. Die dem Endgerät 2 zugeordnete Sende-Empfangs-Einheit T1 ist als so genannter Ethernet-Physical-Layer-(PHY)-Transceiver ausgebildet und nach dem Ethernet-Datenübertragungsstandard IEEE Std 802.3cg^{™}-2019 (10BASE T1L) konfiguriert und/oder spezifiziert. Die Sende-Empfangs-Einheit T1 ist nach dem ISO/OSI-7-Schichtenmodell der Bitübertragungsschicht zugeordnet. Mit anderen Worten ist die Sende-Empfangs-Einheit T1 konfiguriert, zur Übertragung von Daten und somit Informationen zumindest ein Signal in Form eines elektrischen Impulses in die Leitung L einzukoppeln und an das Endgerät 2 zu senden. Ferner ist die Sende-Empfangs-Einheit T1 konfiguriert, zumindest ein Signal in Form eines elektrischen Impulses aus der Leitung L auszukoppeln und weiterzuleiten. Die Datenübertragungsrate liegt bei 10MBit/s. Das zumindest eine Signal kann vorzugsweise Bestandteil eines zu übertragenden Datenpakets sein.

Die Sende-Empfangs-Einheit T1 ermöglicht eine Vollduplex-Datenübertragung über ein einziges Twisted-Pair-Adernpaar der elektrischen Leitung L wodurch vor allem kleinere Endgeräte, wie oben beispielhaft beschrieben, auf relativ einfache Art und Weise angebunden werden können und für welche die angegebene Datenübertragungsrate ausreichend ist.

Die Sende-Empfangs-Einheit T1 umfasst entsprechende Komponenten, Elemente und Funktionen (beispielsweise Ethernet-PHY-Kern, Ein- und Ausgangstaktpufferung, Steuerregister, Subsystemregister, Schaltung zur Überwachung der Spannungsversorgung, MAC-Schnittstelle, Steuerlogik, etc.), auf welche hierin nicht näher eingegangen wird.

Analog der Konfiguration der Sende-Empfangs-Einheit T1 sind auch die weiteren Sende-Empfangs-Einheiten T2 bis T8 und T9 bis T16 konfiguriert.

Bei der Netzwerk-Kopplungseinrichtung 1 gemäß der vorliegenden Erfindung sind die Sende-Empfangs-Einheiten T1 bis T8 und T9 bis T16 als Einkanal-Sende-Empfangs-Einheiten jeweils einer Anschluss-Einheit P1 bis P16, das heißt jeweils einem Port P1 bis P16 zugeordnet.

Die Netzwerk-Kopplungseinrichtung 1 umfasst ferner eine Steuereinheit SE. Die Steuereinheit SE ist konfiguriert, das zumindest eine Signal über die zumindest eine Sende-Empfangs-Einheit T1 bis T16 und die jeweils zugeordnete, zumindest eine Anschluss-Einheit P1 bis P16 an das Gerät 2 zu leiten und/oder von dem Gerät 2 zu empfangen. Die Steuereinheit SE ist konfiguriert, das zumindest eine Signal und vorzugsweise das dahinterstehende Ethernet-Datenpaket gemäß einem entsprechenden Takt zu übertragen.

Die Steuereinheit SE der Netzwerk-Kopplungseinrichtung 1 ist vorzugsweise nach dem Fast-Ethernet oder besonders bevorzugt nach dem Gigabit-Ethernet-Datenübertragungsstandard spezifiziert und/oder konfiguriert und demnach für Datenübertragungsraten von 100MBit/s oder 1GBit/s ausgebildet.

Die Netzwerk-Kopplungseinrichtung 1 umfasst zumindest 4 Wandlungsmodule SM1 bis SM4. Die jeweiligen Wandlungsmodule SM1 bis SM4 sind einerseits mit den jeweiligen Sende-Empfangs-Einheiten T1 bis T16 verbunden sowie andererseits mit der Steuereinheit SE der Netzwerk-Kopplungseinrichtung 1. Die Steuereinheit SE umfasst hierzu ein Steuereinheit-Schnittstellenelement SES oder ist mit einem Steuereinheit-Schnittstellenelement SES der Netzwerk-Kopplungseinrichtung 1 verbunden. Das Steuereinheit-Schnittstellenelement SES ist zur Anbindung der zumindest 4 Wandlungsmodule SM1 bis SM4 konfiguriert. Die Wandlungsmodule SM1 bis SM4 sind vorzugsweise jeweils als weiterer, halbleiterbasierter Switch-Baustein ausgebildet und über jeweils einen Uplink-Port (in Figur4 aus Gründen der Übersichtlichkeit nicht explizit gekennzeichnet dargestellt) über das Steuereinheit-Schnittstellenelement SES an die Steuereinheit SE angebunden. Mit anderen Worten dient die Steuereinheit SE als übergeordnete Steuereinheit SE der Netzwerk-Kopplungseinrichtung 1.

Im Falle des Endgeräts 2, welches über die Leitung L und die Anschluss-Einheit P1 an die Netzwerk-Kopplungseinrichtung 1 angebunden ist, sorgt das Wandlungsmodul SM1 dafür und/oder ist das Wandlungsmodul SM1 konfiguriert, das zumindest eine Signal zur Übertragung von der Steuereinheit SE an die Sende-Empfangs-Einheit T1 zu wandeln, sodass eine Übertragung von Daten über die Netzwerk-Kopplungseinrichtung 1 ermöglicht wird.

Die Sende-Empfangs-Einheit T1 ist somit über das Wandlungsmodul SM1 mit der Steuereinheit SE gekoppelt.

Das Steuereinheit-Schnittstellenelement SES ist vorzugsweise als Serial Gigabit Media-Independent Interface-(SGMII)-Schnittstelle oder als Quad Serial Gigabit Media-Independent Interface-(QSGMII)-Schnittstelle ausgebildet, oder umfasst eine SGMII-Schnittstellenfunktionalität oder eine QSGMII-Schnittstellenfunktionalität. Das Sende-Empfangs-Einheit-Schnittstellenelement T1S ist als Reduced Media-Independent Interface-(RMII)-Schnittstelle ausgebildet ist und/oder umfasst eine RMII-Schnittstelle.

Das Wandlungsmodul SM1 kann ferner ausgebildet und/oder konfiguriert sein, die jeweilige Sende-Empfangs-Einheit T1 bis T16 mit einem Takt von im Wesentlichen 50 MHz und/oder von zumindest 50 MHz zu versorgen und/oder zu betreiben. Mit anderen Worten kann an der jeweiligen Sende-Empfangs-Einheit T1 bis T16 ein Signalausgang mit entsprechender Frequenz angelegt werden.

Es ist alternativ auch möglich, dass das Wandlungsmodul SM1 ein erstes Schnittstellenelement zur Koppelung mit der zumindest einen Sende-Empfangs-Einheit T1 und ein zweites Schnittstellenelement zur Koppelung mit der Steuereinheit SE aufweist, wobei das erste Schnittstellenelement als SGMII-Schnittstelle oder als QSGMII-Schnittstelle ausgebildet ist, oder eine SGMII-Schnittstelle oder eine QSGMII-Schnittstelle umfasst. Ferner ist es möglich, dass das zweite Schnittstellenelement des Wandlungsmoduls SM2 eine RMII-Schnittstelle ausgebildet ist oder eine RMII-Schnittstelle umfasst.

Die vorliegende Erfindung ist nicht auf die vorstehend beschriebenen Ausführungsbeispiele beschränkt. Vielmehr ist eine Vielzahl von Varianten und Abwandlungen möglich gemäß dem Gegenstand und den Merkmalen der Ansprüche.

### Bezugszeichenliste

- 1: Netzwerk-Kopplungseinrichtung (Switch)
- 2: Gerät/Endgerät
- N: Netzwerk
- LS1, LS2: programmierbare logische Schaltung (FPGA)
- P1, ..., P16: Anschluss-Einheit (Port)
- SE, SE1, SE2: Steuereinheit
- SES: Steuereinheit-Schnittstellenelement
- SM1, ..., SM4: Wandlungsmodul
- T1, ..., T16: Sende-Empfangs-Einheit (PHY-Transceiver)
- T1S: Sende-Empfangs-Einheit-Schnittstellenelement

## Patentansprüche

1. Netzwerk-Kopplungseinrichtung (1) zur Anbindung zumindest eines Geräts (2) an ein Netzwerk (N) über eine elektrische Leitung (L), mit
zumindest zwei Anschluss-Einheiten (P1, ..., P16) zur Verbindung des zumindest einen Geräts (2) mit der Netzwerk-Kopplungseinrichtung (1) über die elektrische Leitung (L), und
zumindest zwei Sende-Empfangs-Einheiten (T1, ..., T16), wobei die zumindest zwei Sende-Empfangs-Einheiten (T1, ..., T16) jeweils einer der zumindest zwei Anschluss-Einheiten (P1, ..., P16) zugeordnet sind und zum Ein- und/oder Auskoppeln zumindest eines Signals in die Leitung (L) und/oder aus der Leitung (L) konfiguriert sind, und
einer Steuereinheit (SE), wobei die Steuereinheit (SE) konfiguriert ist, das zumindest eine Signal über eine der zumindest zwei Sende-Empfangs-Einheiten (T1, ..., T16) und eine der zumindest zwei Anschluss-Einheiten (P1, ..., P16) an das Gerät (2) zu leiten und/oder von dem Gerät (2) zu empfangen,
wobei die Netzwerk-Kopplungseinrichtung (1) zumindest ein Wandlungsmodul (SM1, ..., SM4) umfasst, wobei das zumindest eine Wandlungsmodul (SM1, ..., SM4) zwischen den zumindest zwei Sende-Empfangs-Einheiten (T1, ..., T16) und der Steuereinheit (SE) angeordnet ist und konfiguriert ist, das zumindest eine Signal zur Übertragung zwischen der Steuereinheit (SE) und den zumindest zwei Sende-Empfangs-Einheiten (T1, ..., T6) zu wandeln,
wobei das zumindest eine Wandlungsmodul (SM1, ..., SM4) ein erstes Schnittstellenelement zur Koppelung mit der Steuereinheit (SE) und ein zweites Schnittstellenelement zur Koppelung mit den zumindest zwei Sende-Empfangs-Einheiten (T1, ..., T16) aufweist, wobei das zweite Schnittstellenelement als RMII-Schnittstelle ausgebildet ist oder eine RMII-Schnittstellenfunktionalität umfasst.

2. Netzwerk-Kopplungseinrichtung (1) nach Anspruch 1,
wobei das zumindest eine Wandlungsmodul (SM1, ..., SM4) jeweils mit vier Sende-Empfangs-Einheiten (T1, ..., T16) gekoppelt ist.

3. Netzwerk-Kopplungseinrichtung (1) nach Anspruch 1 oder 2,
wobei die Steuereinheit (SE) ein Steuereinheit-Schnittstellenelement (SES) und die zumindest zwei Sende-Empfangs-Einheiten (T1, ..., T16) jeweils ein Sende-Empfangs-Einheit-Schnittstellenelement (T1S) aufweist, und die Steuereinheit (SE) mit dem zumindest einen Wandlungsmodul (SM1, ..., SM4) über das Steuereinheit-Schnittstellenelement (SES) und die zumindest zwei Sende-Empfangs-Einheiten (T1, ..., T16) mit dem zumindest einen Wandlungsmodul (SM1, ..., SM4) über das Sende-Empfangs-Einheit-Schnittstellenelement (T1S) gekoppelt ist.

4. Netzwerk-Kopplungseinrichtung (1) nach Anspruch 3,
wobei das Steuereinheit-Schnittstellenelement (SES) als SGMII-Schnittstelle oder als QSGMII-Schnittstelle ausgebildet ist, oder eine SGMII-Schnittstellenfunktionalität oder eine QSGMII-Schnittstellenfunktionalität umfasst.

5. Netzwerk-Kopplungseinrichtung (1) nach Anspruch 3 oder 4,
wobei das Sende-Empfangs-Einheit-Schnittstellenelement (T1S) als RMII-Schnittstelle ausgebildet ist oder eine RMII-Schnittstellenfunktionalität umfasst.

6. Netzwerk-Kopplungseinrichtung (1) nach Anspruch 1,
wobei das erste Schnittstellenelement als SGMII-Schnittstelle oder als QSGMII-Schnittstelle ausgebildet ist, oder eine SGMII-Schnittstellenfunktionalität oder eine QSGMII-Schnittstellenfunktionalität umfasst.

7. Netzwerk-Kopplungseinrichtung (1) nach einem der vorhergehenden Ansprüche,
wobei die Steuereinheit (SE) nach dem Fast-Ethernet-Datenübertragungsstandard oder vorzugsweise nach dem Gigabit-Ethernet-Datenübertragungsstandard konfiguriert ist.

8. Netzwerk-Kopplungseinrichtung (1) nach einem der vorhergehenden Ansprüche,
wobei die zumindest zwei Sende-Empfangs-Einheiten (T1, ..., T16) als Ethernet-Physical-Layer-(PHY)-Transceiver ausgebildet und/oder konfiguriert sind; und/oder nach dem Ethernet-Datenübertragungsstandard IEEE Std 802.3cgTM-2019 (10BASE T1L) konfiguriert und/oder spezifiziert sind und für das Ein- und/oder Auskoppeln des zumindest einen Signals vorzugsweise eine Datenübertragungsrate zumindest bis 10 Mbits/s bereitstellen.

9. Netzwerk-Kopplungseinrichtung (1) nach einem der vorhergehenden Ansprüche,
wobei die zumindest zwei Anschluss-Einheiten (P1, ..., P16) als Port, vorzugsweise als RJ-45-Anschlussbuchse, ausgebildet sind.

10. Netzwerk-Kopplungseinrichtung (1) nach einem der vorhergehenden Ansprüche,
wobei das zumindest eine Wandlungsmodul (SM1, ..., SM4) konfiguriert ist, die zumindest zwei Sende-Empfangs-Einheiten (T1, ..., T16) mit einem Takt von 50 MHz zu versorgen.

11. Netzwerk (N) mit zumindest einer Netzwerk-Kopplungseinrichtung (1) nach einem der vorhergehenden Ansprüche.

## Claims

1. A network coupling device (1) for connecting at least one device (2) to a network (N) via an electrical line (L), with
at least two connection units (P1, ..., P16) for connecting the at least one device (2) to the network coupling device (1) via the electrical line (L), and
at least two transmit-receive units (T1, ..., T16), wherein the at least two transmit-receive units (T1, ..., T16) are each assigned to one of the at least two connection units (P1, ..., P16) and are configured for coupling at least one signal into the line (L) and/or out of the line (L), and
a control unit (SE), wherein the control unit (SE) is configured to route the at least one signal via one of the at least two transmit-receive units (T1, ..., T16) and one of the at least two connection units (P1, ..., P16) to the device (2) and/or to receive it from the device (2),
wherein the network coupling device (1) comprises at least one conversion module (SM1, ..., SM4), wherein the at least one conversion module (SM1, ..., SM4) is arranged between the at least two transmit-receive units (T1, ..., T16) and the control unit (SE) and is configured to convert the at least one signal for transmission between the control unit (SE) and the at least two transmit-receive units (T1, ..., T6),
wherein the at least one conversion module (SM1, ..., SM4) has a first interface element for coupling to the control unit (SE) and a second interface element for coupling to the at least two transmit-receive units (T1, ..., T16), wherein the second interface element is designed as an RMII interface or comprises an RMII interface functionality.

2. The network coupling device (1) according to claim 1,
wherein the at least one conversion module (SM1, ..., SM4) is in each case coupled to four transmit-receive units (T1, ..., T16).

3. The network coupling device (1) according to claim 1 or 2,
wherein the control unit (SE) has a control unit interface element (SES) and the at least two transmit-receive units (T1, ..., T16) each have a transmit-receive unit interface element (T1S), and the control unit (SE) is coupled to the at least one conversion module (SM1, ..., SM4) via the control unit interface element (SES) and the at least two transmit-receive units (T1, ..., T16) are coupled to the at least one conversion module (SM1, ..., SM4) via the transmit-receive unit interface element (T1S).

4. The network coupling device (1) according to claim 3,
wherein the control unit interface element (SES) is designed as an SGMII interface or as a QSGMII interface, or comprises an SGMII interface functionality or a QSGMII interface functionality.

5. The network coupling device (1) according to claim 3 or 4,
wherein the transmit-receive unit interface element (T1S) is designed as an RMII interface or comprises an RMII interface functionality.

6. The network coupling device (1) according to claim 1,
wherein the first interface element is designed as an SGMII interface or as a QSGMII interface, or comprises an SGMII interface functionality or a QSGMII interface functionality.

7. The network coupling device (1) according to one of the preceding claims,
wherein the control unit (SE) is configured according to the Fast Ethernet data transmission standard or preferably according to the Gigabit Ethernet data transmission standard.

8. The network coupling device (1) according to one of the preceding claims,
wherein the at least two transmit-receive units (T1, ..., T16) are designed and/or configured as Ethernet physical layer (PHY) transceivers; and/or are configured and/or specified according to the Ethernet data transmission standard IEEE Std 802.3cgTM-2019 (10BASE T1L) and preferably provide a data transmission rate of at least up to 10 Mbits/s for coupling the at least one signal in and/or out.

9. The network coupling device (1) according to one of the preceding claims,
wherein the at least two connection units (P1, ..., P16) are designed as ports, preferably as RJ-45 connector sockets.

10. The network coupling device (1) according to one of the preceding claims,
wherein the at least one conversion module (SM1, ..., SM4) is configured to supply the at least two transmit-receive units (T1, ..., T16) with a clock of 50 MHz.

11. A network (N) with at least one network coupling device (1) according to one of the preceding claims.

## Revendications

1. Dispositif de couplage de réseau (1) pour le raccordement d'au moins un appareil (2) à un réseau (N) via une ligne électrique (L), avec
au moins deux unités de raccordement (P1, ..., P16) pour la connexion dudit au moins un appareil (2) au dispositif de couplage de réseau (1) via la ligne électrique (L), et
au moins deux unités d'émission-réception (T1, ..., T16), les au moins deux unités d'émission-réception (T1, ..., T16) étant respectivement associées à l'une des au moins deux unités de raccordement (P1, ..., P16) et étant configurées pour injecter et/ou extraire au moins un signal dans la ligne (L) et/ou de la ligne (L), et
une unité de commande (SE), l'unité de commande (SE) étant configurée pour acheminer l'au moins un signal via l'une des au moins deux unités d'émission-réception (T1, ..., T16) et l'une des au moins deux unités de raccordement (P1, ..., P16) vers l'appareil (2) et/ou pour le recevoir à partir de l'appareil (2),
le dispositif de couplage de réseau (1) comprenant au moins un module de conversion (SM1, ..., SM4), l'au moins un module de conversion (SM1, ..., SM4) étant disposé entre les au moins deux unités d'émission-réception (T1, ..., T16) et l'unité de commande (SE) et étant configuré pour convertir l'au moins un signal pour la transmission entre l'unité de commande (SE) et les au moins deux unités d'émission-réception (T1, ..., T6),
l'au moins un module de conversion (SM1, ..., SM4) présentant un premier élément d'interface pour le couplage avec l'unité de commande (SE) et un deuxième élément d'interface pour le couplage avec les au moins deux unités d'émission-réception (T1, ..., T16), le deuxième élément d'interface étant réalisé sous forme d'interface RMII ou comprenant une fonctionnalité d'interface RMII.

2. Dispositif de couplage de réseau (1) selon la revendication 1,
dans lequel l'au moins un module de conversion (SM1, ..., SM4) est, dans chaque cas, couplé à quatre unités d'émission-réception.

3. Dispositif de couplage de réseau (1) selon la revendication 1 ou 2,
dans lequel l'unité de commande (SE) présente un élément d'interface d'unité de commande (SES) et les au moins deux unités d'émission-réception (T1, ..., T16) présentent chacune un élément d'interface d'unité d'émission-réception (T1S), et l'unité de commande (SE) est couplée à l'au moins un module de conversion (SM1, ..., SM4) via l'élément d'interface d'unité de commande (SES) et les au moins deux unités d'émission-réception (T1, ..., T16) sont couplées à l'au moins un module de conversion (SM1, ..., SM4) via l'élément d'interface d'unité d'émission-réception (T1S).

4. Dispositif de couplage de réseau (1) selon la revendication 3,
dans lequel l'élément d'interface d'unité de commande (SES) est réalisé sous forme d'interface SGMII ou sous forme d'interface QSGMII, ou comprend une fonctionnalité d'interface SGMII ou une fonctionnalité d'interface QSGMII.

5. Dispositif de couplage de réseau (1) selon la revendication 3 ou 4,
dans lequel l'élément d'interface d'unité d'émission-réception (T1S) est réalisé sous forme d'interface RMII ou comprend une fonctionnalité d'interface RMII.

6. Dispositif de couplage de réseau (1) selon la revendication 1,
dans lequel le premier élément d'interface est réalisé sous forme d'interface SGMII ou sous forme d'interface QSGMII, ou comprend une fonctionnalité d'interface SGMII ou une fonctionnalité d'interface QSGMII.

7. Dispositif de couplage de réseau (1) selon l'une quelconque des revendications précédentes,
dans lequel l'unité de commande (SE) est configurée selon la norme de transmission de données Fast Ethernet ou, de préférence, selon la norme de transmission de données Gigabit Ethernet.

8. Dispositif de couplage de réseau (1) selon l'une quelconque des revendications précédentes,
dans lequel les au moins deux unités d'émission-réception (T1, ..., T16) sont réalisées et/ou configurées en tant qu'émetteurs-récepteurs Ethernet de couche physique (PHY) ; et/ou sont configurées et/ou spécifiées selon la norme de transmission de données Ethernet IEEE Std 802.3cgTM-2019 (10BASE T1L) et fournissent de préférence, pour l'injection et/ou l'extraction de l'au moins un signal, un débit de transmission de données allant au moins jusqu'à 10 Mbits/s.

9. Dispositif de couplage de réseau (1) selon l'une quelconque des revendications précédentes,
dans lequel les au moins deux unités de raccordement (P1, ..., P16) sont chacune réalisées en tant que port, de préférence en tant qu'embase de raccordement RJ-45.

10. Dispositif de couplage de réseau (1) selon l'une quelconque des revendications précédentes,
dans lequel l'au moins un module de conversion (SM1, ..., SM4) est configuré pour alimenter les au moins deux unités d'émission-réception (T1, ..., T16) avec une horloge de 50 MHz.

11. Réseau (N) avec au moins un dispositif de couplage de réseau (1) selon l'une quelconque des revendications précédentes.
